Europäisches Patentamt

European Patent Office

Office européen des brevets

(19)

(11) Numéro de publication: **0 034 987**

**A1**

(12) # DEMANDE DE BREVET EUROPEEN

(21) Numéro de dépôt: **81400263.0**

(22) Date de dépôt: **20.02.81**

(51) Int. Cl.³: **G 02 B 7/26**

(30) Priorité: **22.02.80 FR 8003934**

(43) Date de publication de la demande:
**02.09.81 Bulletin 81/35**

(84) Etats contractants désignés:
**AT BE CH DE GB IT LI NL SE**

(71) Demandeur: **COMPAGNIE Deutsch (Société Anonyme)**
**8, rue Henri Regnault**
**F-92212 Saint-Cloud(FR)**

(72) Inventeur: **Puille, Richard**
**3, rue de la Mouillère**
**F-45000 Orleans(FR)**

(72) Inventeur: **Guerin, Jean-Jacques**
**60, Rue Guignegault**
**F-45100 Orleans(FR)**

(74) Mandataire: **Laget, Jean-Loup et al,**
**Cabinet Pierre Loyer 18, Rue de Mogador**
**F-75009 Paris(FR)**

(54) **Dispositif de connexion pour fibres optiques.**

(57) Le guide (29) du manchon mâle (25) est constitué par deux tubes emboîtés de façon télescopique, à savoir un tube-guide proprement dit (34) buté contre l'épaulement interne (27) délimitant vers l'avant la chambre d'expansion (38) et un fourreau (33) qui glisse à frottement doux sur le tube-guide (34) et dont le fond présente un ajour central (24) destiné au passage de l'extrémité du tronçon de fibre (43) du manchon femelle (26) et une garniture tubulaire (36) élastique est disposée entre la face frontale (34a) du tube-guide (34) et le fond annulaire du fourreau (33).

./...

EP 0 034 987 A1

Fig. 2

- 1 -

Dispositif de connexion pour fibres optiques

L'invention concerne un connecteur amovible pour le raccordement de deux tronçons d'une fibre optique.

Une telle connexion amovible présente des difficultés provenant de la fragilité des fibres, mais aussi de leur très faible diamètre alors que les extrémités frontales des deux tronçons, appliquées l'une contre l'autre, doivent être aussi parfaitement que possible, coplanaires et coaxiales, afin que la perte de puissance, due à la connexion, ait une valeur minimale.

Le brevet français n° 79-21898 décrit un dispositif de connexion entre deux tronçons de fibre optique, formé de deux manchons, un mâle et un femelle, destinés à être traversés longitudinalement, respectivement par l'un des tronçons à raccorder et portant chacun, à leurs extrémités, en regard, un guide tubulaire pour l'extrémité libre du tronçon de fibre correspondant, suivi d'une chambre d'expansion s'étendant jusqu'à un moyen de serrage permettant l'immobilisation dudit tronçon de fibre, le guide tubulaire du manchon mâle faisant saillie par l'une de ses extrémités hors de ce dernier et étant en butée à son extrémité opposée contre un épaulement situé en avant de la chambre d'expansion, tandis que le guide du manchon femelle peut coulisser vers l'intérieur de ce dernier, à l'encontre de l'action d'un ressort, les deux tronçons étant immobilisés de façon telle que l'écartement de leurs extrémités, lorsque les guides tubulaires se touchent, est inférieur à la course de coulissement du guide du manchon femelle.

Dans l'exemple de réalisation décrit dans ce brevet français n° 79-21898, le guide tubulaire du manchon femelle fait légèrement saillie hors de ce dernier lorsqu'il est au repos, mais, bien entendu, il pourrait également affleurer l'extrémité libre dudit manchon ou même être en retrait vers l'intérieur. La seule condition à respecter étant d'immobiliser les deux tronçons de fibre, pour qu'au repos, les deux guides étant amenés en contact, les extrémités desdits tronçons présentent un écartement inférieur à la course du guide femelle. Et cela, quelle que soit la cause déterminant la fin de cette course, que ce soit l'écrasement total du ressort, ou l'entrée en contact des faces en regard des deux manchons. Dans l'exemple représenté dans ce brevet français n° 79-21898, ces deux causes possibles sont confondues, mais ce n'est pas une obligation et les deux manchons pourraient être immobilisés fermement l'un par rapport à l'autre sans que leurs faces frontales soient en contact.

Les modes de réalisation du dispositif, prévus dans ce brevet français n° 79-21898, permettent le maintien en position coaxiale des extrémités des deux tronçons de fibre, assurent entre leurs faces frontales un contact en pression par l'élasticité propre de la fibre et protègent efficacement lesdites faces des pollutions extérieures.

Les problèmes posés se trouvent ainsi résolus et la perte de puissance due à la connexion est acceptable, mais cela à condition que, lors de la pression des extrémités l'une contre l'autre, entraînant la courbure élastique des tronçons dans leur chambre d'expansion respective, les faces frontales des coeurs optiques ne glissent pas l'un par rapport à l'autre en écrasant le revêtement de fibre contre

- 3 -     **0034987**

la face interne du guide tubulaire. Autrement dit, les dispositifs selon ce brevet français n° 79-21898, sont bien adaptés aux fibres possédant un revêtement dur (verre dopé, par exemple), mais sont peu compatibles avec les fibres optiques ayant un gainage mou.

Or, la tendance actuelle est précisement orientée vers les fibres constituées d'un guide d'ondes, ou coeur, en silice et d'un gainage en silicone mou. Ces fibres présentent, en effet, de nombreux avantages: pertes de transmissions faibles, robustesse, grande fiabilité, souplesse et coût moindre.

La présente invention a pour objet un dispositif de connexion amovible mieux adapté aux fibres à revêtement mou, mais pouvant également être utilisé avec des fibres à revêtement dur. Ce dispositif est du type rappelé ci-avant et est remarquable en ce que le guide du manchon mâle est constitué par deux tubes emboîtés de façon télescopique, à savoir, un tube-guide proprement dit buté contre l'épaulement interne délimitant vers l'avant la chambre d'expansion et un fourreau qui glisse à frottement doux sur le tube-guide et dont le fond présente un ajour central destiné au passage de l'extrémité du tronçon de fibre du manchon femelle, et en ce qu'une garniture tubulaire élastique est disposée entre la face frontale du tube-guide et le fond annulaire du fourreau.

Avantageusement, la garniture tubulaire est constituée d'une matière élastique ayant un indice de réfraction sensiblement identique à celui du revêtement des tronçons de fibre, de manière à reconstituer ledit revêtement lorsque l'extrémité de chacun desdits tronçons a été dénudée pour assurer un parfait centrage des deux tronçons de fibres.

L'invention sera mieux comprise à la lecture de la description qui va suivre et à l'examen du dessin annexé dans lequel:

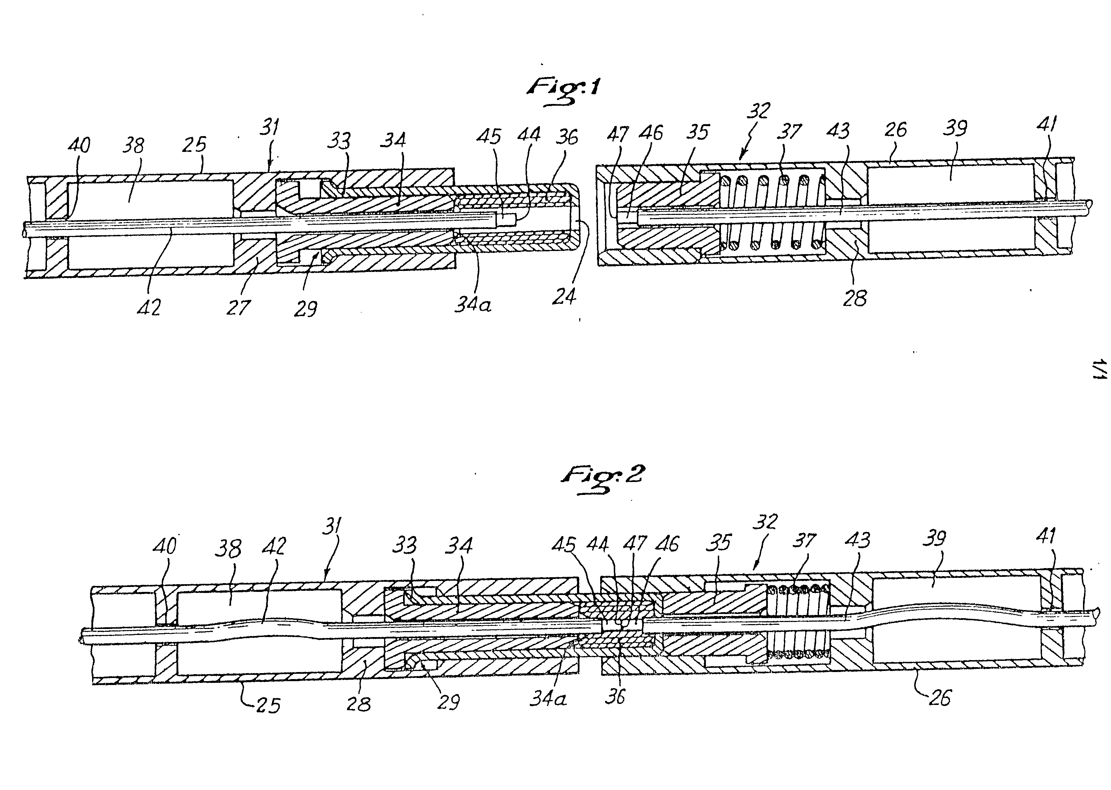

La figure 1 est une coupe longitudinale des deux éléments de la connexion avant assemblage et,

La figure 2 est une coupe longitudinale des deux éléments de la connexion assemblés.

Sur le dessin, la connexion entre deux tronçons 42 et 43 d'une fibre optique comprend deux éléments 31 et 32, destinés à être assemblés l'un avec l'autre par tout moyen mécanique approprié et non représenté parce que ne faisant pas partie de l'invention.

Chaque élément est constitué par un manchon (25, 26) destiné à être traversé longitudinalement par un tronçon (42, 43) de fibre optique et à maintenir ce dernier immobilisé en position longitudinale grâce à un moyen de serrage (40, 41) approprié. A leurs extrémités en regard, chaque manchon porte un guide tubulaire (29, 35) dont l'alésage a un diamètre légèrement supérieur à celui de la fibre optique. Cette différence n'est que de quelques microns, le diamètre de la fibre étant toujours inférieur à 1.000 microns et pouvant descendre jusqu'à 50 microns. Le guide 29 porté par le manchon 25 est destiné à pénétrer dans le manchon 26 par l'extrémité libre de ce dernier. C'est pourquoi le manchon 25 est appelé ici manchon mâle et le manchon 26, manchon femelle.

Le guide tubulaire 35 du manchon femelle 26 peut coulisser vers l'intérieur dudit manchon à l'encontre de l'action d'un ressort 37 qui prend appui sur un épaulement interne 28. Au repos, la face frontale du guide 35 est légèrement en retrait par rapport à celle du manchon 26.

Le guide tubulaire 29 du manchon mâle 25 fait saillie vers l'extérieur, hors de ce dernier. Il est constitué par deux tubes emboîtés de façon télescopique, à savoir un tube-guide proprement dit 34 et un fourreau 33. Le tube 34 a un alésage longitudinal sensiblement identique à celui du guide 35 et est en butée par sa face arrière contre un épaulement interne 27. Le fourreau 33 qui glisse à frottement doux sur le tube 34 et son fond, tourné vers l'extérieur, présente un ajour central 24 dont le diamètre est supérieur à celui des alésages des guides 34 et 35, c'est dire qu'il peut être traversé sans difficulté par l'extrémité du tronçon de fibre 43 comme il sera dit ci-après. Entre la face frontale 34a du guide 34 et le fond angulaire du fourreau 33 est disposée une garniture 36 tubulaire élastique dont le diamètre intérieur est au moins égal à celui de l'ajour 24.

Dans chaque manchon (25, 26) est ménagée entre le moyen de serrage (40, 41) et l'épaulement interne (27, 28) une chambre d'expansion (38, 39).

Dans l'exemple représenté, la fibre optique comporte un guide d'ondes (ou coeur), en silice par exemple, et un revêtement ou gainage optique mou, en silicone mou par exemple. Pour réaliser la connexion entre des faces 44 et 47 parfaitement propres, l'extrémité libre de chaque tronçon (42, 43) a été dénudée sur une faible longueur de manière à faire apparaître le coeur (45, 46). Pour reconstituer, après l'assemblage, le revêtement des parties dénudées, la garniture élastique 36 est alors constituée en une matière ayant un indice de réfraction sensiblement égal à celui du revêtement des tronçons de fibre.

Pour réaliser la connexion, on rapproche les deux éléments 31 et 32 et on engage l'extrémité en saillie du fourreau 33 dans l'extrémité libre du manchon 26. Lorsque le mouvement est poursuivi, le fourreau 33 enfonce le guide 35 à l'encontre du ressort 37 et l'extrémité du tronçon de fibre 43 traverse l'ajour 24 pour s'engager dans la garniture 36. Les faces frontales 44 et 47 des coeurs 45 et 46, viennent en contact. Les tronçons de fibre ont été immobilisés dans leurs manchons respectifs pour que cet instant coïncide à peu près avec la compression totale du ressort 37. En poursuivant la manoeuvre, le guide 35, alors en butée dans son manchon, repousse le fourreau 33 qui glisse à frottement doux à l'intérieur du manchon 25 et sur le guide 34 jusqu'à buter contre l'extrémité de ce dernier. Lors de ce coulissement la garniture 36 est "écrasée" (figure 2) et vient épouser parfaitement les formes des extrémités des tronçons de fibre, reconstituant ainsi le revêtement des parties dénudées des coeurs 45 et 46. Au cours de cette dernière phase, les deux tronçons tendent à se repousser mutuellement, mais, tenus par les moyens de serrage 40 et 41, ils ne peuvent que s'infléchir dans les chambres d'expansion 38 et 39, comme représenté à la figure 2.

Dans l'exemple représenté (voir figure 2), la butée du fourreau 33 est obtenue avant que les faces frontales des manchons 25 et 26 n'entrent en contact, mais les dimensions des divers organes du dispositif pourraient être choisies pour qu'il y ait coïncidence de ces deux prises d'appui.

0034987

Revendications de brevet

1. Dispositif de connexion amovible entre deux tronçons de fibre optique, formé de deux manchons, un mâle et un femelle, destinés à être traversés longitudinalement respectivement par l'un des tronçons à raccorder et portant chacun, à leurs extrémités en regard, un guide tubulaire pour l'extrémité libre du tronçon de fibre correspondant, suivi d'une chambre d'expansion s'étendant jusqu'à un moyen de serrage pour immobiliser ledit tronçon de fibre, le guide tubulaire du manchon mâle faisant saillie par l'une de ses extrémités hors de ce dernier et étant en butée à son extrémité opposée contre un épaulement situé en avant de la chambre d'expansion, tandis que le guide du manchon femelle peut coulisser vers l'intérieur de ce dernier, à l'encontre de l'action d'un ressort, les deux tronçons de fibre étant immobilisés de façon telle que l'écartement de leurs extrémités, lorsque les guides tubulaires sont amenés en contact, est inférieur à la course du coulissement du guide du manchon femelle, caractérisé en ce que le guide (29) du manchon mâle (25) est constitué par deux tubes emboîtés de façon télescopique, à savoir, un tube-guide proprement dit (34) buté contre l'épaulement interne (27) délimitant vers l'avant la chambre d'expansion (38) et un fourreau (33) qui glisse à frottement doux sur le tube-guide (34) et dont le fond présente un ajour central (24) destiné au passage de l'extrémité du tronçon de fibre (43) du manchon femelle (26), et en ce qu'une garniture tubulaire (36) élastique est disposée entre la face frontale (34a) du tube-guide (34) et le fond annulaire du fourreau (33).

2. Dispositif selon la revendication 1, caractérisé en ce que la garniture tubulaire (36) est constituée d'une matière élastique ayant un indice de réfraction sensiblement identique à celui du revêtement des tronçons de fibre (42, 43), de manière à reconstituer ledit revêtement lorsque l'extrémité (44, 46) de chacun desdits tronçons a été dénudée pour assurer un parfait centrage des deux tronçons de fibres.

0034987

Fig.1

Fig.2

**0034987**

Numéro de la demande

Office européen
des brevets

**RAPPORT DE RECHERCHE EUROPEENNE**

EP 81 40 0263

| | | | |
|---|---|---|---|
| **DOCUMENTS CONSIDERES COMME PERTINENTS** | | | CLASSEMENT DE LA DEMANDE (Int. Cl.³) |
| Categorie | Citation du document avec indication, en cas de besoin, des parties pertinentes | Revendica-tion concernée | |
| | FR - A - 2 278 088 (ITT INDUSTRIES) <br> * revendications 1-5 et figures 1-4 * <br> & DE - A - 2 529 352 <br> & GB - A - 1 458 897 <br><br> -- <br><br> US - A - 4 078 910 (D.G. DALGOUTTE) <br> * colonne 2; figures 2,3 * <br> & GB - A - 1 440 782 <br> & DE - A - 2 621 127 <br><br> -- | 1 <br><br><br><br><br><br><br> 1 | G 02 B 7/26 <br><br><br><br><br><br><br><br><br> DOMAINES TECHNIQUES RECHERCHES (Int. Cl.³) |
| E/P | GB - A - 2 045 454 (FERRANTI) <br> * abrégé; figures 1-11 * <br> & FR - A - 2 453 422 <br> & DE - A - 3 010 395 <br><br> -------- | 1,2 | G 02 B 7/26 |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interference
D: document cité dans la demande
L: document cité pour d'autres raisons

&: membre de la même famille, document correspondant

| | | | |
|---|---|---|---|
| ⟩⟨ | Le present rapport de recherche a ete établi pour toutes les revendications | | |
| Lieu de la recherche <br> La Haye | Date d'achevement de la recherche <br> 18.05.1981 | Examinateur <br> MALIC | |

OEB Form 1503.1   06.78